# EUROPEAN PATENT APPLICATION

(11) **EP 4 072 184 A1**
(43) Date of publication of application: **12.10.2022**
(21) Application number: 19954914.8
(22) Date of filing: 03.12.2019
(51) Int. Cl.: H04W 16/28, H04W 72/04, H04L 27/26, H04B 7/06, H04W 88/02

(54) **TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/047287
(87) International publication number: WO 2021/111532

(57) **Abstract**

A terminal according to one aspect of the present disclosure includes: a receiving section that receives a Downlink Control Information (DCI) format 0_0 for scheduling a Physical Uplink Shared Channel (PUSCH) within a bandwidth part or a cell to which a Physical Uplink Control Channel (PUCCH) resource with spatial relation information is not configured when a higher layer parameter satisfies a condition; and a control section that determines a spatial relation for the PUSCH. According to one aspect of the present disclosure, it is possible to appropriately transmit UL transmission.

## Description

### Technical Field

The present disclosure relates to a terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), New Radio (NR) or 3GPP Rel. 15 or subsequent releases) are also studied.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is studied for a future radio communication system (e.g., NR) that a user terminal (a terminal or a User Equipment (UE)) controls transmission/reception processing based on information related to Quasi-Co-Location (QCL).

However, how to determine a QCL parameter (spatial relation) of Uplink (UL) transmission is not clear. Unless the UE determines an appropriate spatial relation, there is a risk of degradation of system performance such as a decrease of a throughput.

It is therefore one of objects of the present disclosure to provide a terminal and a radio communication method that appropriately transmit UL transmission.

### Solution to Problem

A terminal according to one aspect of the present disclosure includes: a receiving section that receives a Downlink Control Information (DCI) format 0_0 for scheduling a Physical Uplink Shared Channel (PUSCH) within a bandwidth part or a cell to which a Physical Uplink Control Channel (PUCCH) resource with spatial relation information is not configured when a higher layer parameter satisfies a condition; and a control section that determines a spatial relation for the PUSCH.

### Advantageous Effects of Invention

According to one aspect of the present disclosure, it is possible to appropriately transmit UL transmission.

### Brief Description of Drawings

Fig. 1 is a diagram illustrating one example of a QCL assumption of a PDSCH.
Fig. 2 is a diagram illustrating one example of an operation according to embodiment 2.
Fig. 3 is a diagram illustrating one example of a schematic configuration of a radio communication system according to one embodiment.
Fig. 4 is a diagram illustrating one example of a configuration of a base station according to the one embodiment.
Fig. 5 is a diagram illustrating one example of a configuration of a user terminal according to the one embodiment.
Fig. 6 is a diagram illustrating one example of hardware configurations of the base station and the user terminal according to the one embodiment.

### Description of Embodiments

### (TCI, Spatial Relation and QCL)

It is studied for NR to control UE's reception processing (e.g., at least one of reception, demapping, demodulation and decoding) and transmission processing (e.g., at least one of transmission, mapping, precoding, modulation and encoding) of at least one of a signal and a channel (that are expressed as a signal/channel) based on a Transmission Configuration Indication state (TCI state).

The TCI state may indicate an element that is applied to a downlink signal/channel. An element corresponding to a TCI state applied to an uplink signal/channel may be expressed as a spatial relation.

The TCI state is information related to Quasi-Co-Location (QCL) of a signal/channel, and may be referred to as, for example, a spatial reception parameter or spatial relation information. The TCI state may be configured to the UE per channel or per signal.

QCL is an index that indicates a statistical property of a signal/channel. In a case where, for example, a certain signal/channel and another signal/channel have a QCL relation, the QCL relation may mean that it is possible to assume that at least one of a Doppler shift, a Doppler spread, an average delay, a delay spread and a spatial parameter (e.g., spatial reception parameter (spatial Rx parameter)) is identical (at least one of these parameters is quasi-co-located) between a plurality of these different signals/channels.

In addition, the spatial reception parameter may be associated with a UE reception beam (e.g., reception analog beam), and the beam may be specified based on spatial QCL. The QCL (or at least one element of the QCL) in the present disclosure may be read as spatial QCL (sQCL).

A plurality of types of QCL (QCL types) may be specified. For example, four QCL types A to D whose parameters (or parameter sets) that can be assumed as identical are different may be provided, and the parameters (that may be referred to as QCL parameters) are as follows:
- QCL type A (QCL-A): Doppler shift, Doppler spread, average delay and delay spread,
- QCL type B (QCL-B): Doppler shift and Doppler spread,
- QCL type C (QCL-C): Doppler shift and average delay, and
- QCL type D (QCL-D): spatial reception parameter.

A UE's assumption that a given Control Resource Set (CORESET), channel or reference signal has a specific QCL (e.g., QCL type D) relation with another CORESET, channel or reference signal may be referred to as a QCL assumption.

The UE may determine at least one of a transmission beam (Tx beam) and a reception beam (Rx beam) of the signal/channel based on a TCI state or the QCL assumption of the signal/channel.

The TCI state may be, for example, information related to QCL of a target channel (in other words, a Reference Signal (RS) for the target channel) and another signal (e.g., another RS). The TCI state may be configured (indicated) by a higher layer signaling, a physical layer signaling or a combination of these signalings.

In the present disclosure, the higher layer signaling may be one or a combination of, for example, a Radio Resource Control (RRC) signaling, a Medium Access Control (MAC) signaling and broadcast information.

For example, an MAC Control Element (MAC CE) or an MAC Protocol Data Unit (PDU) may be used for the MAC signaling. The broadcast information may be, for example, a Master Information Block (MIB), a System Information Block (SIB), Remaining Minimum System Information (RMSI) or Other System Information (OSI).

The physical layer signaling may be, for example, Downlink Control Information (DCI).

A channel to which the TCI state or the spatial relation is configured (indicated) may be at least one of, for example, a Physical Downlink Shared Channel (PDSCH), a Physical Downlink Control Channel (PDCCH), a Physical Uplink Shared Channel (PUSCH) and a Physical Uplink Control Channel (PUCCH).

Furthermore, an RS that has the QCL relation with the channel may be at least one of, for example, a Synchronization Signal Block (SSB), a Channel State Information Reference Signal (CSI-RS), a Sounding Reference Signal (SRS), a tracking CSI-RS (also referred to as a Tracking Reference Signal (TRS)), and a QCL detection reference signal (also referred to as a QRS).

The SSB is a signal block including at least one of a Primary Synchronization Signal (PSS), a Secondary Synchronization Signal (SSS) and a Physical Broadcast Channel (PBCH). The SSB may be referred to as an SS/PBCH block.

The UE may receive configuration information (e.g., PDSCH-Config or tci-StatesToAddModList) including a list of information elements of TCI states by a higher layer signaling.

An information element of a TCI state ("TCI-state IE" of RRC) configured by the higher layer signaling may include a TCI state ID and one or a plurality of pieces of QCL information ("QCL-Info"). The QCL information may include at least one of information (RS related information) that relates to an RS that is in a QCL relation, and information (QCL type information) that indicates a QCL type. The RS related information may include information such as an RS index (e.g., an SSB index or a Non-Zero-Power CSI-RS (NZP CSI-RS) resource Identifier (ID)), an index of a cell in which the RS is arranged, and an index of a Bandwidth Part (BWP) in which the RS is arranged.

According to Rel. 15 NR, both of an RS of the QCL type A and an RS of the QCL type D or only the RS of the QCL type A may be configured as a TCI state of at least one of a PDCCH and a PDSCH to the UE.

In a case where a TRS is configured as the RS of the QCL type A, the TRS is unlike a DeModulation Reference Signal (DMRS) of the PDCCH or the PDSCH, and the same TRS is periodically transmitted over a long period of time. The UE can measure the TRS, and calculate, for example, an average delay and a delay spread.

The UE with the TRS configured as the RS of the QCL type A to the TCI state of the DMRS of the PDCCH or the PDSCH can assume that the DMRS of the PDCCH or the PDSCH and a parameter (such as the average delay or the delay spread) of the QCL type A of the TRS are the same, so that it is possible to obtain the parameter (such as the average delay or the delay spread) of the QCL type A of the DMRS of the PDCCH or the PDSCH from a measurement result of the TRS. When performing channel estimation on at least one of the PDCCH and the PDSCH, the UE can perform more accurate channel estimation by using the measurement result of the TRS.

The UE configured with the RS of the QCL type D can determine a UE reception beam (a spatial domain reception filter or a UE spatial domain reception filter) by using the RS of the QCL type D.

An RS of a QCL type X of a TCI state may mean an RS that has a relation of the QCL type X with (a DMRS of) a certain channel/signal, and this RS may be referred to as a QCL source of the QCL type X of the TCI state.

### <TCI State for PDCCH>

Information related to QCL of a PDCCH (or a DMRS antenna port associated with the PDCCH) and a certain RS may be referred to as, for example, a TCI state for the PDCCH.

The UE may decide the TCI state for a UE-specific PDCCH (CORESET) based on a higher layer signaling. For example, one or a plurality of (K) TCI states may be configured to the UE per CORESET by an RRC signaling.

The UE may activate one of a plurality of TCI states configured by the RRC signaling for each CORESET by using an MAC CE. The MAC CE may be referred to as a TCI State Indication for a UE-specific PDCCH MAC CE. The UE may monitor the CORESET based on an active TCI state associated with the CORESET.

### <TCI State for PDSCH>

Information related to QCL of a PDSCH (or a DMRS antenna port associated with the PDSCH) and a certain DL-RS may be referred to as, for example, a TCI for the PDSCH.

M (M ≥ 1) TCI states for PDSCHs (QCL information for the M PDSCHs) may be notified (configured) to the UE by a higher layer signaling. In addition, the number M of TCI states configured to the UE may be limited according to at least one of UE capability and a QCL type.

DCI used to schedule a PDSCH may include a given field (that may be referred to as, for example, a TCI field or a TCI state field) that indicates a TCI state for the PDSCH. The DCI may be used to schedule a PDSCH of one cell, and may be referred to as, for example, DL DCI, a DL assignment, a DCI format 1_0 and a DCI format 1_1.

Whether or not the TCI field is included in the DCI may be controlled based on information notified from a base station to the UE. The information may be information (e.g., TCI presence information, intra-DCI presence information or a higher layer parameter TCI-PresentInDCI) that indicates whether the TCI field is present or absent in the DCI. The information may be configured to the UE by, for example, the higher layer signaling.

In a case where TCI states of more than 8 types are configured to the UE, the TCI states of 8 types or less may be activated (or indicated) by using an MAC CE. The MAC CE may be referred to as a TCI States Activation/Deactivation for a UE-specific PDSCH MAC CE. The value of the TCI field in the DCI may indicate one of the TCI states activated by the MAC CE.

In a case where the TCI presence information that is set as "enabled" is configured to a CORESET for scheduling a PDSCH (a CORESET used to transmit a PDCCH for scheduling a PDSCH) for the UE, the UE may assume that a TCI field is present in the DCI format 1_1 of the PDCCH transmitted on the CORESET.

In a case where the TCI presence information is not configured to the CORESET for scheduling the PDSCH, or the PDSCH is scheduled by the DCI format 1_0, and in a case where a time offset between reception of DL DCI (DCI for scheduling the PDSCH) and reception of a PDSCH associated with the DCI is a threshold or more, the UE may assume that a TCI state or a QCL assumption for the PDSCH is identical to a TCI state or a QCL assumption applied to the CORESET used to transmit a PDCCH for scheduling the PDSCH to determine QCL of a PDSCH antenna port.

In a case where the TCI presence information is set as "enabled", and in a case where a TCI field in DCI within a Component Carrier (CC) for scheduling (PDSCH) indicates an activated TCI state within the CC to be scheduled or a DL BWP, and the PDSCH is scheduled by the DCI format 1_1, the UE may use a TCI that conforms to a value of a TCI field in a detected PDCCH including DCI to determine QCL of the PDSCH antenna port. In a case where a time offset between reception of DL DCI (for scheduling the PDSCH) and reception of a PDSCH associated with the DCI (the PDSCH scheduled by the DCI) is a threshold or more, the UE may assume that a DM-RS port of a PDSCH of a serving cell is quasi-co-located with an RS in a TCI state related to a QCL type parameter given by an indicated TCI state.

In a case where a single slot PDSCH is configured to the UE, the indicated TCI state may be based on an activated TCI state in a slot including a scheduled PDSCH. In a case where a multiple slot PDSCH is configured to the UE, the indicated TCI state may be based on an activated TCI state in a first slot including a scheduled PDSCH, or the UE may expect that the indicated TCI state is identical over slots including the scheduled PDSCH. In a case where the UE is configured with a CORESET associated with a search space set for cross-carrier scheduling, and in a case where the TCI presence information is set as "enabled" to the CORESET for the UE, and at least one of TCI states configured to a serving cell scheduled by a search space set includes the QCL type D, the UE may assume that a time offset between a detected PDCCH and a PDSCH associated with the PDSCH is a threshold or more.

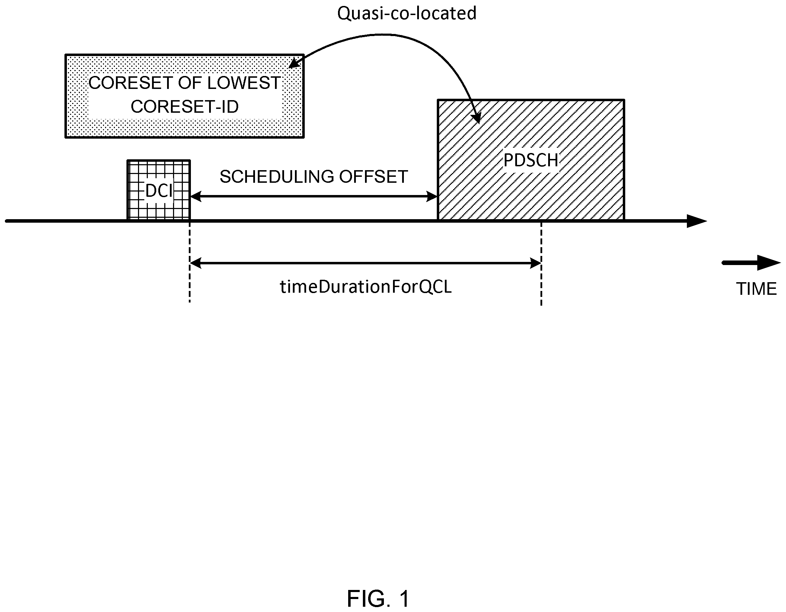

In both of a case where the intra-DCI TCI information (higher layer parameter TCI-PresentInDCI) is set as "enabled" in an RRC connected mode, and a case where the intra-DCI TCI information is not configured, and in a case where a time offset between reception of DL DCI (DCI for scheduling a PDSCH) and reception of a corresponding PDSCH (the PDSCH scheduled by the DCI) is less than a threshold, the UE may assume that a DM-RS port of a PDSCH of a serving cell is quasi-co-located with an RS related to a QCL parameter used to indicate QCL of a PDCCH in a CORESET that has a lowest CORESET-ID in a latest slot in which one or more CORESETs within an active BWP of the serving cell are monitored by the UE, and that is associated with a monitored search space (Fig. 1). This RS may be referred to as a default TCI state of a PDSCH or a default QCL assumption of the PDSCH.

The time offset between reception of the DL DCI and reception of the PDSCH associated with the DCI may be referred to as a scheduling offset.

Furthermore, the above threshold may be referred to as, for example, a QCL time duration, "timeDurationForQCL", "Threshold", "Threshold for offset between a DCI indicating a TCI state and a PDSCH scheduled by the DCI", "Threshold-Sched-Offset", a scheduling offset threshold or a scheduling offset threshold.

The QCL time duration may be based on UE capability, or may be based on delay related to, for example, decoding of a PDCCH and beam switching. The QCL time duration may be a minimum time that is necessary for the UE to receive a PDCCH and apply spatial QCL information received in DCI for PDSCH processing. The QCL time duration may be expressed as the number of symbols per subcarrier spacing, or may be expressed as a time (e.g., µs). Information of the QCL time duration may be reported as UE capability information from the UE to the base station, or may be configured from the base station to the UE by using a higher layer signaling.

For example, the UE may assume that the DMRS port of the above PDSCH is quasi-co-located with a DL-RS that is based on the TCI state activated for the CORESET associated with the above lowest CORESET-ID. The latest slot may be, for example, a slot for receiving DCI for scheduling the above PDSCH.

In addition, the CORESET-ID may be an ID (an ID for identifying a CORESET or controlResourceSetId) configured by an RRC information element "ControlResourceSet".

In a case where even one CORESET is not configured to a CC, the default TCI state may be an activated TCI state that is applicable to a PDSCH within an active DL BWP of the CC, and has a lowest ID.

In a case where a PDSCH and a PDCCH for scheduling the PDSCH are within different Component Carriers (CCs) (cross-carrier scheduling) in Rel. 16 and subsequent releases, and in a case where PDCCH-to-PDSCH delay is shorter than a QCL time duration or in a case where a TCI state is absent in DCI for scheduling, the UE may obtain a QCL assumption for the scheduled PDSCH from an active TCI state that is applicable to a PDSCH within an active BWP of the scheduled cell and has a lowest ID.

### <Spatial Relation for PUCCH>

A parameter (PUCCH configuration information or PUCCH-Config) used to transmit a PUCCH may be configured to the UE by a higher layer signaling (e.g., Radio Resource Control (RRC) signaling). The PUCCH configuration information may be configured per partial band (e.g., uplink Bandwidth Part (BWP)) within a carrier (also referred to as, for example, a cell or a Component Carrier (CC)).

The PUCCH configuration information may include a PUCCH resource set information (e.g., PUCCH-ResourceSet) list, and a PUCCH spatial relation information (e.g., PUCCH-SpatialRelationInfo) list.

The PUCCH resource set information may include a PUCCH resource index (an ID such as PUCCH-ResourceId) list (e.g., resourceList).

Furthermore, in a case where the UE does not have dedicated PUCCH resource configuration information (e.g., dedicated PUCCH resource configuration) provided by the PUCCH resource set information in the PUCCH configuration information (before RRC setup), the UE may determine a PUCCH resource set based on a parameter (e.g., pucch-ResourceCommon) in system information (e.g., a System Information Block Type 1 (SIB 1) or Remaining Minimum System Information (RMSI)). The PUCCH resource set may include 16 PUCCH resources.

On the other hand, in a case where the UE has the above dedicated PUCCH resource configuration information (a UE-dedicated uplink control channel configuration or a dedicated PUCCH resource configuration) (after RRC setup), the UE may determine a PUCCH resource set according to the number of UCI information bits.

Based on at least one of a value of a given field (e.g., PUCCH resource indicator field) in Downlink Control Information (DCI) (e.g., the DCI format 1_0 or 1_1 used for scheduling of a PDSCH), the number of CCEs (N_{CCE}) in a COntrol REsource SET (CORESET) for reception of a PDCCH that carries the DCI, and an index (n_{CCE, 0}) of a beginning (first) CCE of the PDCCH reception, the UE may determine one PUCCH resource (index) in the above PUCCH resource set (e.g., a PUCCH resource set that is determined specifically for a cell or in a dedicated manner for the UE).

The PUCCH spatial relation information (e.g., RRC information element "PUCCH-spatialRelationInfo") may indicate a plurality of candidate beams (spatial domain filters) for PUCCH transmission. The PUCCH spatial relation information may indicate a spatial association between a Reference Signal (RS) and a PUCCH.

The PUCCH spatial relation information list may include some elements (PUCCH spatial relation information Information Element (IE)). Each PUCCH spatial relation information may include at least one of, for example, a PUCCH spatial relation information index (an ID such as pucch-SpatialRelationInfoId), a serving cell index (an ID such as servingCellId), and information related to an RS (reference RS) having a spatial relation with each PUCCH.

For example, the information related to the RS may be an SSB index and a CSI-RS index (e.g., NZP-CSI-RS resource configuration ID), or an SRS resource ID and a BWP ID. The SSB index, the CSI-RS index and the SRS resource ID may be associated with at least one of a beam, a resource and a port selected by measuring a corresponding RS.

When more than one piece of the spatial relation information related to the PUCCH are configured, the UE may perform control to activate one PUCCH spatial relation information for one PUCCH resource at a certain time based on a PUCCH spatial relation activation/deactivation MAC CE.

The PUCCH spatial relation activation/deactivation MAC CE according to Rel-15 NR is expressed as 3 octets (8 bits × 3 = 24 bits) of octets (Oct) 1 to 3 in total.

The MAC CE may include information of, for example, an application target serving cell ID ("Serving Cell ID" field), a BWP ID ("BWP ID" field) and a PUCCH resource ID ("PUCCH Resource ID" field).

Furthermore, the MAC CE includes an "Si" (i = 0 to 7) field. In a case where a certain Sᵢ field indicates 1, the UE activates spatial relation information of a spatial relation information ID #i. In a case where the certain Sᵢ field indicates 0, the UE deactivates the spatial relation information of the spatial relation information ID #i.

3 ms after transmitting an Acknowledgement (ACK) for an MAC CE for activating given PUCCH spatial relation information, the UE may activate the PUCCH relation information indicated by the MAC CE.

### <Spatial Relations for SRS and PUSCH>

The UE may receive information (SRS configuration information such as a parameter in the RRC control element "SRS-Config") used to transmit a measurement reference signal (e.g., Sounding Reference Signal (SRS)).

More specifically, the UE may receive at least one of information related to one or a plurality of SRS resource sets (SRS resource set information such as the RRC control element "SRS-ResourceSet"), and information related to one or a plurality of SRS resources (SRS resource information such as the RRC control element "SRS-Resource").

One SRS resource set may be associated with a given number of SRS resources (the one SRS resource set may be obtained by grouping the given number of SRS resources). Each SRS resource may be specified based on an SRS Resource Indicator (SRI) or an SRS resource Identifier (ID).

The SRS resource set information may include SRS resource set IDs (SRS-ResourceSetId), a list of SRS resource IDs (SRS-ResourceId) used for the resource set, an SRS resource type, and information of SRS usage.

In this regard, the SRS resource type may indicate one of a Periodic SRS (P-SRS), a Semi-Persistent SRS (SP-SRS), and an Aperiodic SRS (an A-SRS or an AP-SRS). In addition, the UE may transmit the P-SRS and the SP-SRS periodically (or periodically after activation), and transmit the A-SRS based on an SRS request of DCI.

Furthermore, the usage (an RRC parameter "usage" or a Layer-1 (LI) parameter "SRS-SetUse") may be, for example, beam management, Codebook (CB)-based transmission, NonCodebook (NCB)-based transmission or antenna switching. An SRS used for codebook-based transmission or noncodebook-based transmission may be used to determine a precoder of codebook-based or noncodebook-based PUSCH transmission based on an SRI.

For example, in a case of the codebook-based transmission, the UE may determine the precoder for PUSCH transmission based on an SRI, a Transmitted Rank Indicator (TRI), and a Transmitted Precoding Matrix Indicator (TPMI). In a case of the noncodebook-based transmission, the UE may determine the precoder for PUSCH transmission based on the SRI.

The SRS resource information may include SRS resource IDs (SRS-ResourceId), the number of SRS ports, SRS port numbers, transmission Comb, SRS resource mapping (e.g., time and/or frequency resource positions, a resource offset, a resource periodicity, a repetition factor, the number of SRS symbols and an SRS bandwidth), hopping related information, an SRS resource type, sequence IDs and SRS spatial relation information.

The SRS spatial relation information (e.g., RRC information element "spatialRelationInfo") may indicate spatial relation information between a given reference signal and the SRS. The given reference signal may be at least one of a Synchronization Signal/Physical Broadcast Channel (SS/PBCH) block, a Channel State Information Reference Signal (CSI-RS) and an SRS (e.g., another SRS). The SS/PBCH block may be referred to as a Synchronization Signal Block (SSB).

The SRS spatial relation information may include at least one of an SSB index, a CSI-RS resource ID and an SRS resource ID as an index of the above given reference signal.

In addition, in the present disclosure, the SSB index, the SSB resource ID and an SSB Resource Indicator (SSBRI) may be interchangeably read. Furthermore, the CSI-RS index, the CSI-RS resource ID and a CSI-RS Resource Indicator (CRI) may be interchangeably read. Furthermore, the SRS index, the SRS resource ID and the SRI may be interchangeably read.

The SRS spatial relation information may include, for example, a serving cell index and a BWP index (BWP ID) associated with the given reference signal.

According to NR, transmission of an uplink signal may be controlled based on whether or not there is a Beam Correspondence (BC). The BC may be, for example, capability of a certain node (e.g., the base station or the UE) for determining a beam (a transmission beam or a Tx beam) used for transmission of a signal based on a beam (a reception beam or an Rx beam) used for reception of the signal.

In addition, the BC may be referred to as a transmission/reception beam correspondence (Tx/Rx beam correspondence), beam reciprocity, beam calibration, calibrated/non-calibrated, reciprocity calibrated/non-calibrated, a correspondence degree or a match degree.

In, for example, a case where there is not the BC, the UE may transmit an uplink signal (e.g., a PUSCH, a PUCCH or an SRS) by using a beam (spatial domain transmission filter) that is identical to an SRS (or an SRS resource) indicated by the base station based on a measurement result of one or more SRSs (or SRS resources).

On the other hand, in a case where there is the BC, the UE may transmit an uplink signal (e.g., a PUSCH, a PUCCH or an SRS) by using a beam (spatial domain transmission filter) that is identical or corresponds to a beam (spatial domain reception filter) used for reception of a given SSB or CSI-RS (or CSI-RS resource).

In a case where spatial relation information related to an SSB or a CSI-RS, and an SRS is configured for a certain SRS resource (in a case where, for example, there is the BC), the UE may transmit an SRS resource by using the same spatial domain filter (spatial domain transmission filter) as the spatial domain filter (spatial domain reception filter) for reception of the SSB or CSI-RS. In this case, the UE may assume that the UE reception beam of the SSB or the CSI-RS and the UE transmission beam of the SRS are the same.

In a case where spatial relation information related to another SRS (reference SRS) and the SRS (target SRS) is configured for a certain SRS (target SRS) resource (in the case where, for example, there is not the BC), the UE may transmit the target SRS resource by using the same spatial domain filter (spatial domain transmission filter) as the spatial domain filter (spatial domain transmission filter) for transmission of the reference SRS. That is, in this case, the UE may assume that the UE transmission beam of the reference SRS and the UE transmission beam of the target SRS are the same.

The UE may determine a spatial relation of a PUSCH scheduled by DCI based on a value of a given field (e.g., SRS Resource Indicator (SRI) field) in the DCI (e.g., DCI format 0_1). More specifically, the UE may use spatial relation information (e.g., RRC information element "spatialRelationInfo") of an SRS resource determined based on the given field value (e.g., SRI) for PUSCH transmission.

In a case where codebook-based transmission is used for a PUSCH, two SRS resources may be configured to the UE by RRC, and one of the two SRS resources may be indicated to the UE by DCI (1-bit given field). In a case where noncodebook-based transmission is used for a PUSCH, four SRS resources may be configured to the UE by RRC, and one of the four SRS resources may be indicated to the UE by DCI (2-bit given field). To use spatial relations other than the two or four spatial relations configured by RRC, the RRC reconfiguration is necessary.

In addition, a DL-RS can be configured to a spatial relation of an SRS resource used for a PUSCH. For example, spatial relations of a plurality of (e.g., up to 16) SRS resources for an SP-SRS can be configured to the UE by RRC, and one of a plurality of SRS resources can be indicated to the UE by an MAC CE.

### (Default Spatial Relation)

A default spatial relation is studied. In a case where spatial relation information for a dedicated PUCCH (a PUCCH based on a dedicated PUCCH configuration (PUCCH-Config)) or a dedicated SRS (an SRS based on a dedicated SRS configuration (SRS-Config)) except an SRS including beam management usage (usage = 'beamManagement') is not configured in a certain frequency range (e.g., Frequency Range (FR) 2), the default spatial relation may be applied to the dedicated PUCCH configuration or the dedicated SRS configuration in at least a specific case. The specific case may be a case where a pathloss reference RS is not configured by an RRC signaling.

In, for example, a case where a CORESET is configured on a CC, the default spatial relation may be a TCI state or a QCL assumption of the CORESET having a lowest ID. An RS used for pathloss calculation may be an RS of the QCL type D that is the same as that of the TCI state or the QCL assumption of the CORESET having the lowest ID. The RS used for pathloss calculation may be a periodic RS.

In, for example, a case where even one CORESET is not configured on a CC, the default spatial relation may be a TCI that is applicable to a PDSCH within an active DL-BWP of the CC and has a lowest ID.

The default spatial relation may be applied to the UE that supports a beam correspondence. The default spatial relation may be applied to a single TRP case.

In a case where a pathloss reference RS is not configured, an RS used for pathloss calculation may be referred to as a default pathloss reference RS.

### (Spatial Relation of PUSCH Scheduled by DCI Format 0_0)

According to Rel. 15 NR, for a PUSCH on a cell (CC) scheduled by a DCI format 0_0, the UE transmits the PUSCH according to a spatial relation associated with a dedicated PUCCH resource that has a lowest ID within the active UL BWP of the cell if available. The dedicated PUCCH resource may be a PUCCH resource that is configured in a dedicated manner for the UE (i.e., that is configured by a higher layer parameter PUCCH-Config).

Although a DCI format 0_1 includes an SRI, the DCI format 0_0 does not include an SRI.

Therefore, a PUSCH cannot be scheduled by the DCI format 0_0 for a cell (e.g., Secondary Cell (SCell)) to which the PUCCH resource is not configured.

In a case where a PUCCH on SCell (a PUCCH transmitted on the SCell) is not configured, UCI is transmitted on a PCell. In a case where the PUCCH on SCell is configured, UCI is transmitted on a PUCCH-SCell. Therefore, the PUCCH resource and the spatial relation information do not need to be configured to all SCells, and there may be cells to which PUCCH resources are not configured.

Furthermore, although the DCI format 0_1 includes a Carrier Indicator Field (CIF), the DCI format 0_0 does not include the CIF. Therefore, even when a PUCCH resource is configured to the PCell, it is not possible to perform cross-carrier scheduling on a PUSCH on the SCell by the DCI format 0 0 on the PCell.

According to Rel. 15, a following operation 1 is specified.

### [Operation 1]

The UE does not expect a PUSCH scheduled by the DCI format 0_0 within a BWP to which a PUCCH resource including PUCCH spatial relation information (PUCCH-SpatialRelationInfo) is not configured in the Frequency Range (FR) 2 in the RRC connected mode.

It is studied for Rel. 16 to introduce a new higher layer (RRC) parameter for enabling a UE operation of the default spatial relation (beam) for UL transmission and the default pathloss reference RS. At least one of, for example, a new higher layer parameter (enableDefaultBeamPlForPUSCH0_0) for a PUSCH scheduled by the DCI format 0_0, a new higher layer parameter (enableDefaultBeamPlForPUCCH) for a dedicated PUCCH, and a new higher layer parameter (enableDefaultBeamPlForSRS) for an SRS may be introduced.

According to Rel. 16, a following operation 2 is specified.

### [Operation 2]

It is studied for Rel. 16 that, in a case where a PUCCH resource including a PUCCH spatial relation is not configured to a PUSCH scheduled by the DCI format 0_0 on a cell (CC), the UE transmits a PUSCH according to a spatial relation associated with a specific TCI state or QCL assumption if available.

However, it is thought that, when both of the operation 1 and the operation 2 are specified, the UE cannot appropriately operate. Thus, there is a risk of degradation of system performance such as a decrease of a throughput.

Hence, the inventors of the present invention have conceived a method for appropriately operating the UE for a PUSCH scheduled by the DCI format 0_0.

Embodiments according to the present disclosure will be described in detail below with reference to the drawings. A radio communication method according to each embodiment may be each applied alone or may be applied in combination.

In the present disclosure, a cell, a CC, a carrier, a BWP and a band may be interchangeably read.

In the present disclosure, an index, an ID, an indicator and a resource ID may be interchangeably read.

In the present disclosure, specific UL transmission, a specific UL signal, UL transmission of a specific type, a specific UL channel, a PUSCH, a PUCCH, an SRS, a P-SRS, an SP-SRS and an A-SRS may be interchangeably read. In the present disclosure, a specific DL signal, a specific DL resource, DL transmission of a specific type, specific DL transmission, specific DL reception, a specific DL channel, a PDSCH, a PDCCH, a CORESET, a DL-RS, an SSB and a CSI-RS may be interchangeably read.

A TCI state, a TCI state or a QCL assumption, a QCL assumption, a QCL parameter, a spatial domain reception filter, a UE spatial domain reception filter, a spatial domain filter, a UE reception beam, a DL reception beam, DL precoding, a DL precoder, a DL-RS, an RS of the QCL type D of a TCI state or a QCL assumption, and an RS of the QCL type A of a TCI state or a QCL assumption may be interchangeably read. An RS of the QCL type D, a DL-RS associated with the QCL type D, a DL-RS having the QCL type D, a DL-RS source, an SSB and a CSI-RS may be interchangeably read.

In the present disclosure, the TCI state may be information (e.g., a DL-RS, a QCL type or a cell to which a DL-RS is transmitted) related to a reception beam (spatial domain reception filter) indicated (configured) to the UE. The QCL assumption may be information (e.g., a DL-RS, a QCL type or a cell to which a DL-RS is transmitted) related to a reception beam (spatial domain reception filter) assumed by the UE based on transmission or reception of an associated signal (e.g., PRACH).

In the present disclosure, the latest slot, the most recent slot, the latest search space and the most recent search space may be interchangeably read. In the present disclosure, a lowest ID, a highest ID and a given (specific) ID may be interchangeably read. For example, a CORESET that has the lowest ID, a CORESET that has the highest ID and a CORESET that has a given ID may be interchangeably read. For example, an active TCI state that has the lowest ID, an active TCI state that has the highest ID and an active TCI state that has the given ID may be interchangeably read.

In the present disclosure, a spatial relation, spatial relation information, a spatial relation assumption, a QCL parameter, a spatial domain transmission filter, a UE spatial domain transmission filter, a spatial domain filter, a UE transmission beam, a UL transmission beam, UL precoding, a UL precoder, an RS of a spatial relation, a DL-RS, a QCL assumption, an SRI, a spatial relation based on an SRI and a UL TCI may be interchangeably read.

In the present disclosure, a default TCI state, default QCL and a default QCL assumption may be interchangeably read. Although this TCI state or QCL (QCL assumption) will be mainly described as the default TCI state below, how this TCI state or QCL is described is not limited to this. In addition, a definition of the default TCI state is not limited to this. The default TCI state may be, for example, a TCI state that is assumed in a case where a TCI state/QCL indicated by DCI cannot be used for a certain channel/signal (e.g., PDSCH), or may be a TCI state that is assumed in a case where a TCI state/QCL is not indicated (or configured).

In the present disclosure, a default spatial relation, a default spatial relation assumption, an RS of QCL of a specific DL resource, a TCI state or a QCL assumption of a specific DL resource, a TCI state or a QCL assumption of a specific DL signal, an RS related to a QCL parameter given by a TCI state or a QCL assumption of a specific DL signal, an RS of the QCL type D of a TCI state or a QCL assumption of a specific DL signal, and a spatial relation of reference UL transmission may be interchangeably read.

In the present disclosure, a TRS, a tracking CSI-RS, a CSI-RS that has TRS information (higher layer parameter trs-Info), and an NZP-CSI-RS resource in an NZP-CSI-RS resource set that includes TRS information may be interchangeably read.

In the present disclosure, the DCI format 0_0, DCI that does not include an SRI, DCI that does not include an indication of a spatial relation and DCI that does not include a CIF may be interchangeably read. In the present disclosure, the DCI format 0_1, DCI that includes an SRI, DCI that includes an indication of a spatial relation and DCI that includes a CIF may be interchangeably read.

In the present disclosure, a pathloss reference RS, an RS for pathloss reference, an RS for pathloss estimation, an RS for pathloss calculation, a Pathloss (PL)-RS, an index q_{d}, an RS used for pathloss calculation, an RS resource used for pathloss calculation, and a calculation RS may be interchangeably read. Calculation, estimation and measurement may be interchangeably read.

In the present disclosure, that "the UE transmits specific UL transmission according to a specific spatial relation", that "the UE uses a specific spatial relation as a spatial relation of specific UL transmission", that "the UE assumes (considers) that a spatial relation of specific UL transmission is identical to an RS of a specific spatial relation", and that "the UE assumes (considers) that a spatial relation of specific UL transmission is identical to an RS of the QCL type D of a specific spatial relation" may be interchangeably read.

### (Radio Communication Method)

That any spatial relation is not configured to all PUCCH resources configured to a CC or a BWP, and a PUSCH is scheduled by the DCI format 0_0 on the CC or the BWP may be supported. A spatial relation for the PUSCH may conform to a default spatial relation for a PUCCH resource. A pathloss reference RS for the PUSCH may conform to a default pathloss reference RS for a PUCCH resource.

The default spatial relation for the PUSCH may be a TCI state or a QCL assumption of a CORESET that has a lowest ID. The default pathloss reference RS for the PUSCH may be an RS of the same QCL type D as that of the TCI state or the QCL assumption of the CORESET that has the lowest ID. The default pathloss reference RS may be a periodic RS.

The UE that uses this radio communication method may be a UE that reports by a UE capability signaling (UE capability information) that the UE supports a default spatial relation operation of a PUSCH scheduled by the DCI format 0_0 (an operation of determining a spatial relation of the PUSCH scheduled by the DCI format 0_0 in a case where a PUCCH resource with PUCCH spatial relation information is not configured within the same BWP or CC as that of the PUSCH (a case where there is not the PUCCH resource or a case where there is not the PUCCH resource with the PUCCH spatial relation information)).

In a case where a higher layer parameter satisfies conditions, the UE may receive the DCI format 0_0 for scheduling the PUSCH within the CC or the BWP to which the PUCCH resource including the spatial relation information is not configured. In the case where the higher layer parameter satisfies the conditions, the UE may receive the PUSCH scheduled by the DCI format 0_0 within the CC or the BWP to which the PUCCH resource including the spatial relation information is not configured. In a case where the higher layer parameter does not satisfy the conditions, the UE may not receive the DCI format 0_0 for scheduling the PUSCH within the CC or the BWP to which the PUCCH resource including the spatial relation information is not configured. In the case where the higher layer parameter does not satisfy the conditions, the UE may not expect the PUSCH scheduled by the DCI format 0_0 within the CC or the BWP to which the PUCCH resource including the spatial relation information is not configured. The higher layer parameter may be enableDefaultBeamPlForPUSCH0_0, or may be UE capability information that indicates that the UE supports the default spatial relation operation of the PUSCH scheduled by the DCI format 0 0.

### <Embodiment 1>

The above-described operation 1 may not be specified in a specification. In other words, a UE may expect a PUSCH scheduled by a DCI format 0_0 within a CC or BWP to which a PUCCH resource including PUCCH spatial relation information is not configured in an FR 2 in an RRC connected mode.

At least one of following operations 2a to 2c may be specified in the specification.

### [Operation 2a]

When a higher layer parameter enableDefaultBeamPlForPUSCH0_0 is set to 'disabled' to a PUSCH scheduled by the DCI format 0_0 on the cell (CC) or the BWP, the UE transmits a PUSCH according to a spatial relation associated with a dedicated PUCCH resource that has a lowest ID within an active UL BWP of the cell if available.

### [Operation 2b]

When the higher layer parameter enableDefaultBeamPlForPUSCH0_0 is set to 'enabled' to the PUSCH scheduled by the DCI format 0_0 on the cell (CC) or the BWP, the PUCCH resource on the above active UL BWP (the active UL BWP of the cell) is not configured, and the UE is in the RRC connected mode, the UE transmits a PUSCH according to a spatial relation associated with a QCL assumption of a TCI state of a CORESET that has a lowest ID if available.

### [Operation 2c]

When the higher layer parameter enableDefaultBeamPlForPUSCH0_0 is set to 'enabled' to the PUSCH scheduled by the DCI format 0_0 on the cell (CC) or the BWP, a PUCCH resource on an active UL BWP to which any spatial relation is not configured to all PUCCH resources is configured, and the UE is in the RRC connected mode, the UE transmits a PUSCH according to a spatial relation associated with a QCL assumption of a TCI state of a CORESET that has a lowest ID if available in a case where the CORESET is configured on the CC, and the UE transmits a PUSCH according to a spatial relation associated with an activated TCI state that is available for a PDSCH within an active DL BWP of the CC and has a lowest ID if available in a case where even one CORESET is not configured on the CC.

According to the present embodiment, the UE can appropriately perform the operations 2a to 2c. A PUSCH can be scheduled by the DCI format 0_0 within a CC or a BWP to which a PUCCH resource including PUCCH spatial relation information is not configured, so that it is possible to enhance scheduling flexibility, and reduce an overhead of the spatial relation information.

### <Embodiment 2>

In a case where a higher layer parameter satisfies conditions, a UE may receive a DCI format 0_0 for scheduling a PUSCH within a CC or a BWP to which a PUCCH resource with PUCCH spatial relation information is not configured (may transmit the PUSCH scheduled by the DCI format 0_0). That the higher layer parameter fulfills the conditions may be at least one of that enableDefaultBeamPlForPUSCH0_0 is enabled, that the higher layer parameter enableDefaultBeamPlForPUSCH0_0 is not disabled, that the higher layer parameter enableDefaultBeamPlForPUSCH0_0 is configured, and that the UE reports UE capability information for supporting a default spatial relation operation of the PUSCH scheduled by the DCI format 0 0.

In the present disclosure, that the higher layer parameter enableDefaultBeamPlForPUSCH0_0 is enabled, that the higher layer parameter enableDefaultBeamPlForPUSCH0_0 is configured, that the higher layer parameter enableDefaultBeamPlForPUSCH0_0 set to 'enabled' is configured, that the higher layer parameter enableDefaultBeamPlForPUSCH0_0 is set to 'enabled', that determination of a spatial relation for the PUSCH scheduled by the DCI format 0_0 is enabled, and that the UE reports the UE capability information for supporting the default spatial relation operation of the PUSCH scheduled by the DCI format 0_0 may be interchangeably read.

In the present disclosure, that the higher layer parameter enableDefaultBeamPlForPUSCH0_0 is disabled, that the higher layer parameter enableDefaultBeamPlForPUSCH0_0 is not configured, that the higher layer parameter enableDefaultBeamPlForPUSCH0_0 set to 'disabled' is configured, that the higher layer parameter enableDefaultBeamPlForPUSCH0_0 is set to 'disabled', and that determination of the spatial relation for the PUSCH scheduled by the DCI format 0_0 is disabled may be interchangeably read.

Instead of the above-described operation 1, a following operation 1a or operation 1b may be specified in a specification.

### [Operation 1a]

Except in a case where the higher layer parameter enableDefaultBeamPlForPUSCH0_0 is enabled, the UE does not expect a PUSCH scheduled by the DCI format 0_0 within a CC or a BWP to which a PUCCH resource with PUCCH spatial relation information is not configured in an FR 2 in an RRC connected mode. In a case where the higher layer parameter enableDefaultBeamPlForPUSCH0_0 is not enabled, the UE may not receive the DCI format 0_0 for scheduling the PUSCH within the CC or the BWP to which the PUCCH resource with the PUCCH spatial relation information is not configured in the FR 2 in the RRC connected mode. In a case where the higher layer parameter enableDefaultBeamPlForPUSCH0_0 is enabled, the UE may receive the DCI format 0_0 for scheduling the PUSCH within the CC or the BWP to which the PUCCH resource with the PUCCH spatial relation information is not configured in the FR 2 in the RRC connected mode.

### [Operation 1b]

In a case where the higher layer parameter enableDefaultBeamPlForPUSCH0_0 is disabled or is not configured, the UE does not expect the PUSCH scheduled by the DCI format 0_0 within the CC or the BWP to which the PUCCH resource including the PUCCH spatial relation information is not configured in the FR 2 in the RRC connected mode. In a case where the higher layer parameter enableDefaultBeamPlForPUSCH0_0 is disabled or is not configured, the UE may not receive the DCI format 0_0 for scheduling the PUSCH within the CC or the BWP to which the PUCCH resource including the PUCCH spatial relation information is not configured in the FR 2 in the RRC connected mode. In a case where the higher layer parameter enableDefaultBeamPlForPUSCH0_0 is not disabled or is configured, the UE may receive the DCI format 0_0 for scheduling the PUSCH within the CC or the BWP to which the PUCCH resource including the PUCCH spatial relation information is not configured in the FR 2 in the RRC connected mode.

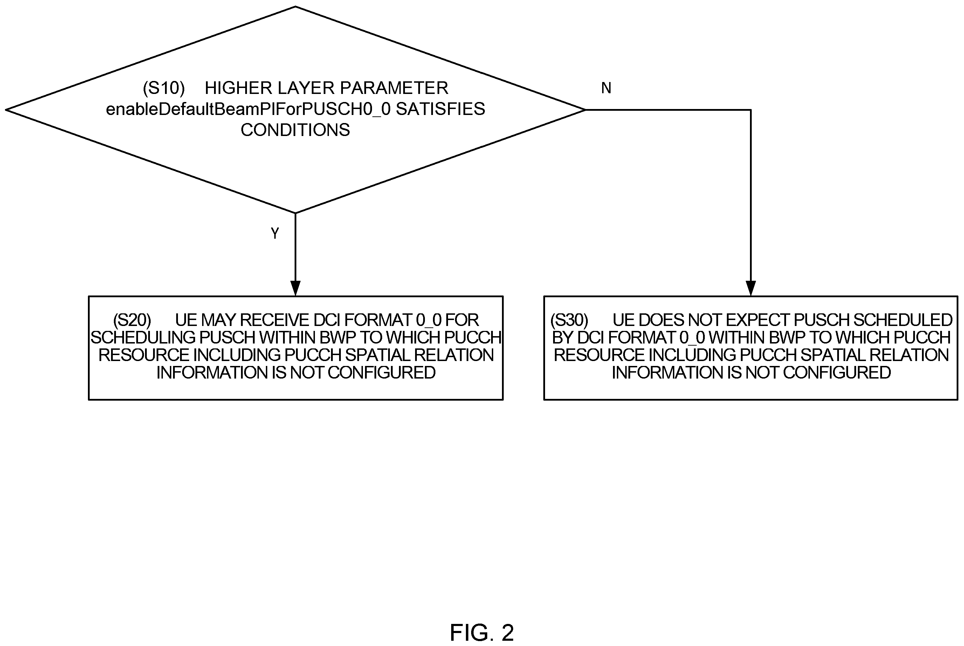

In a case where, for example, the higher layer parameter enableDefaultBeamPlForPUSCH0_0 does not satisfy the conditions as illustrated in Fig. 2 (S10: N), the UE does not expect the PUSCH scheduled by the DCI format 0_0 within the BWP to which the PUCCH resource including the PUCCH spatial relation information is not configured (S30). In a case where, for example, the higher layer parameter enableDefaultBeamPlForPUSCH0_0 satisfies the conditions as illustrated in Fig. 2 (S10: Y), the UE may receive the DCI format 0_0 for scheduling the PUSCH within the BWP to which the PUCCH resource including the PUCCH spatial relation information is not configured (may transmit the PUSCH scheduled by the DCI format 0_0 within the BWP to which the PUCCH resource including the PUCCH spatial relation information is not configured) (S20).

At least one of the above-described operations 2a to 2c may be specified in the specification.

According to the present embodiment, the UE can appropriately perform the operations 2a and 2b. A PUSCH can be scheduled by the DCI format 0_0 within a CC or a BWP to which a PUCCH resource including PUCCH spatial relation information is not configured, so that it is possible to enhance scheduling flexibility, and reduce an overhead of the spatial relation information.

### (Radio Communication System)

The configuration of the radio communication system according to one embodiment of the present disclosure will be described below. This radio communication system uses one or a combination of the radio communication method according to each of the above embodiments of the present disclosure to perform communication.

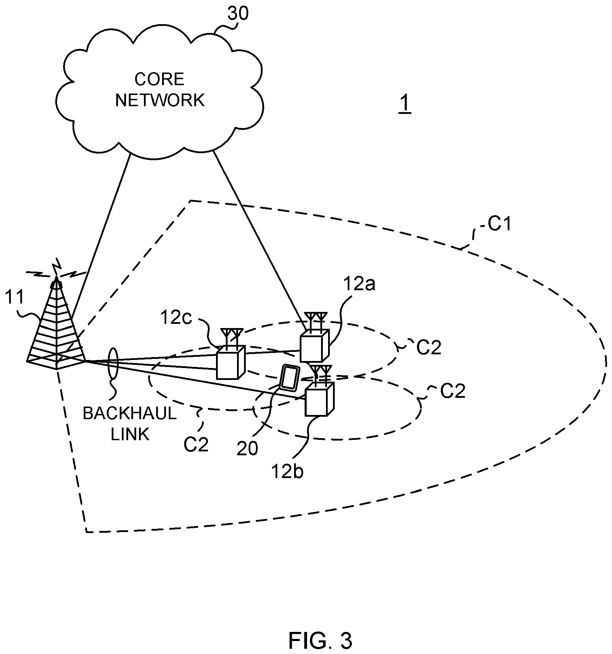

Fig. 3 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity between a plurality of Radio Access Technologies (RATs) (Multi-RAT Dual Connectivity (MR-DC)). MR-DC may include dual connectivity (E-UTRA-NR Dual Connectivity (EN-DC)) of LTE (Evolved Universal Terrestrial Radio Access (E-UTRA)) and NR, and dual connectivity (NR-E-UTRA Dual Connectivity (NE-DC)) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NR-NR Dual Connectivity (NN-DC)) where both of the MN and the SN are base stations (gNBs) according to NR).

The radio communication system 1 may include a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 3. The base stations 11 and 12 will be collectively referred to as a base station 10 below when not distinguished.

The user terminal 20 may connect with at least one of a plurality of base stations 10. The user terminal 20 may use at least one of Carrier Aggregation (CA) and Dual Connectivity (DC) that use a plurality of Component Carriers (CCs).

Each CC may be included in at least one of a first frequency range (Frequency Range 1 (FR 1)) and a second frequency range (Frequency Range 2 (FR 2)). The macro cell C1 may be included in the FR 1, and the small cell C2 may be included in the FR 2. For example, the FR 1 may be a frequency range equal to or less than 6 GHz (sub-6 GHz), and the FR 2 may be a frequency range higher than 24 GHz (above-24 GHz). In addition, the frequency ranges and definitions of the FR 1 and the FR 2 are not limited to these, and, for example, the FR 1 may correspond to a frequency range higher than the FR 2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as a backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the other base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (Physical Downlink Shared Channel (PDSCH)) shared by each user terminal 20, a broadcast channel (Physical Broadcast Channel (PBCH)) and a downlink control channel (Physical Downlink Control Channel (PDCCH)) as downlink channels.

Furthermore, the radio communication system 1 may use an uplink shared channel (Physical Uplink Shared Channel (PUSCH)) shared by each user terminal 20, an uplink control channel (Physical Uplink Control Channel (PUCCH)) and a random access channel (Physical Random Access Channel (PRACH)) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One search space may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Uplink Control Information (UCI) including at least one of Channel State Information (CSI), transmission acknowledgement information (that may be referred to as, for example, Hybrid Automatic Repeat reQuest ACKnowledgement (HARQ-ACK) or ACK/NACK) and a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 may convey a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

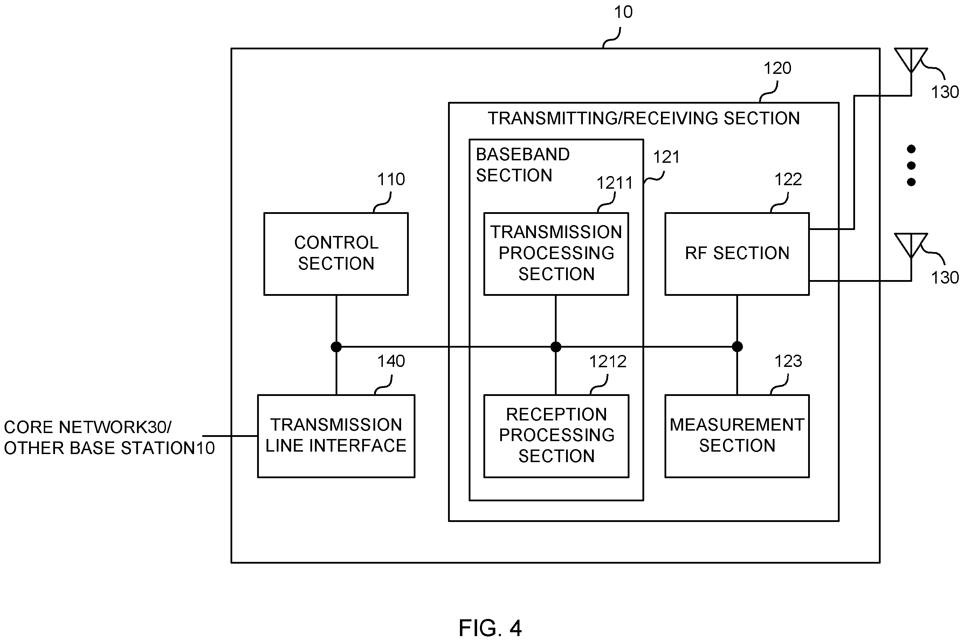

Fig. 4 is a diagram illustrating one example of a configuration of the base station according to the one embodiment. The base station 10 includes a control section 110, a transmitting/receiving section 120, transmitting/receiving antennas 130 and a transmission line interface 140. In addition, the base station 10 may include one or more of each of the control sections 110, the transmitting/receiving sections 120, the transmitting/receiving antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmitting/receiving section 120, the transmitting/receiving antennas 130 and the transmission line interface 140. The control section 110 may generate data, control information or a sequence to be transmitted as a signal, and forward the signal to the transmitting/receiving section 120. The control section 110 may perform call processing (such as configuration and release) of a communication channel, state management of the base station 10 and radio resource management.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit and a transmitting/receiving circuit described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmitting/receiving antenna 130 can be composed of an antenna such as an array antenna described based on the common knowledge in the technical field according to the present disclosure.

The transmitting/receiving section 120 may transmit the above-described downlink channel, synchronization signal and downlink reference signal. The transmitting/receiving section 120 may receive the above-described uplink channel and uplink reference signal.

The transmitting/receiving section 120 may form at least one of a transmission beam and a reception beam by using digital beam forming (e.g., precoding) or analog beam forming (e.g., phase rotation).

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmitting/receiving section 120 (RF section 122) may modulate the baseband signal into a radio frequency range, perform filter processing and amplification on the signal, and transmit the signal of the radio frequency range via the transmitting/receiving antennas 130.

On the other hand, the transmitting/receiving section 120 (RF section 122) may perform amplification and filter processing on the signal of the radio frequency range received by the transmitting/receiving antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmitting/receiving section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmitting section and the receiving section of the base station 10 according to the present disclosure may be composed of at least one of the transmitting/receiving section 120, the transmitting/receiving antenna 130 and the transmission line interface 140.

### (User Terminal)

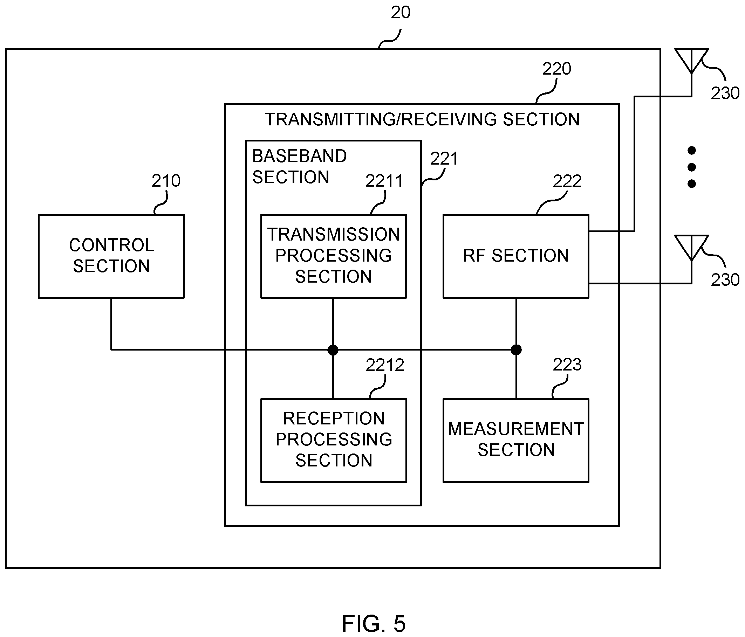

Fig. 5 is a diagram illustrating one example of a configuration of the user terminal according to the one embodiment. The user terminal 20 includes a control section 210, a transmitting/receiving section 220 and transmitting/receiving antennas 230. In this regard, the user terminal 20 may include one or more of each of the control sections 210, the transmitting/receiving sections 220 and the transmitting/receiving antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmitting/receiving section 220 and the transmitting/receiving antennas 230. The control section 210 may generate data, control information or a sequence to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit and a transmitting/receiving circuit described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmitting/receiving antenna 230 can be composed of an antenna such as an array antenna described based on the common knowledge in the technical field according to the present disclosure.

The transmitting/receiving section 220 may receive the above-described downlink channel, synchronization signal and downlink reference signal. The transmitting/receiving section 220 may transmit the above-described uplink channel and uplink reference signal.

The transmitting/receiving section 220 may form at least one of a transmission beam and a reception beam by using digital beam forming (e.g., precoding) or analog beam forming (e.g., phase rotation).

The transmitting/receiving section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing and amplification on the signal, and transmit the signal of the radio frequency range via the transmitting/receiving antennas 230.

On the other hand, the transmitting/receiving section 220 (RF section 222) may perform amplification and filter processing on the signal of the radio frequency range received by the transmitting/receiving antennas 230, and demodulate the signal into a baseband signal.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmitting/receiving section 220 (measurement section 223) may perform measurement related to the received signal. For example, the measurement section 223 may perform, for example, RRM measurement or CSI measurement based on the received signal. The measurement section 223 may measure, for example, received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmitting section and the receiving section of the user terminal 20 according to the present disclosure may be composed of at least one of the transmitting/receiving section 220 and the transmitting/receiving antenna 230.

In a case where a higher layer parameter satisfies conditions, the transmitting/receiving section 220 may receive a Downlink Control Information (DCI) format 0_0 for scheduling a Physical Uplink Shared Channel (PUSCH) within a bandwidth part or a cell to which a Physical Uplink Control Channel (PUCCH) resource with spatial relation information is not configured. The control section 210 may determine a spatial relation for the PUSCH. In a case where the higher layer parameter satisfies the conditions, the transmitting/receiving section 220 may transmit the Physical Uplink Shared Channel (PUSCH) scheduled by the Downlink Control Information (DCI) format 0_0 within the bandwidth part or the cell to which the Physical Uplink Control Channel (PUCCH) resource including the spatial relation information is not configured.

Except in a case where the higher layer parameter indicates that the determination is enabled, the transmitting/receiving section 220 may not receive the DCI format 0_0. Except in a case where the higher layer parameter indicates that the determination is enabled, the transmitting/receiving section 220 may not transmit the PUSCH.

Except in a case where the higher layer parameter indicates that the determination is disabled or the higher layer parameter is not configured, the transmitting/receiving section 220 may not receive the DCI format 0_0. Except in a case where the higher layer parameter indicates that the determination is disabled or the higher layer parameter is not configured, the transmitting/receiving section 220 may not transmit the PUSCH.

The control section 210 may report capability for supporting the determination.

### (Hardware Configuration)

In addition, the block diagrams used to describe the above embodiments illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

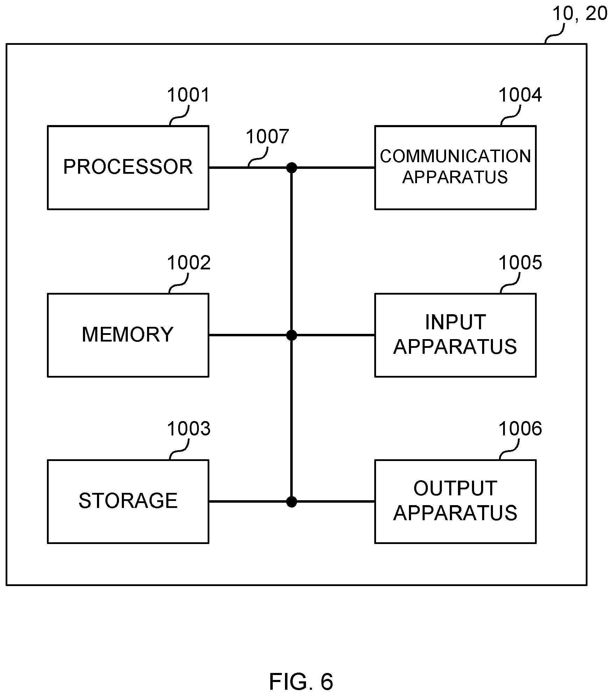

For example, the base station and the user terminal according to the one embodiment of the present disclosure may function as computers that perform processing of the radio communication method according to the present disclosure. Fig. 6 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 6 or may be configured without including part of the apparatuses.

For example, Fig. 6 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmitting/receiving section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiments are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmitting/receiving device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving section 120 (220) and transmitting/receiving antennas 130 (230) may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS, or may be referred to as a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or code word, or may be a processing unit of scheduling or link adaptation. In addition, when the TTI is given, a time period (e.g., the number of symbols) in which a transport block, a code block or a code word is actually mapped may be shorter than the TTI.

In addition, in a case where 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (Physical RB (PRB)), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index that is based on a common reference point of the certain carrier. A PRB may be defined based on a certain BWP, and may be numbered within the certain BWP.

The BWP may include a UL BWP (a BWP for UL) and a DL BWP (a BWP for DL). One or a plurality of BWPs in 1 carrier may be configured to the UE.

At least one of the configured BWPs may be active, and the UE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as the PUCCH and the PDCCH) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiments described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not performing notification of the given information or by performing notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI state)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (Remote Radio Head (RRH))). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (User Equipment (UE))" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmitting apparatus, a receiving apparatus or a radio communication apparatus. In addition, at least one of the base station and the mobile station may be, for example, a device mounted on a moving object or the moving object itself. The moving object may be a vehicle (e.g., a car or an airplane), may be a moving object (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), the Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

In a case where the words "include" and "including" and modifications of these words are used in the present disclosure, these words intend to be comprehensive similar to the word "comprising". Furthermore, the word "or" used in the present disclosure intends to not be an exclusive OR.

In a case where, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiments described in the present disclosure. The invention according to the present disclosure can be carried out as modified and changed aspect without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A terminal comprising:
a receiving section that receives a Downlink Control Information (DCI) format 0_0 for scheduling a Physical Uplink Shared Channel (PUSCH) within a bandwidth part or a cell to which a Physical Uplink Control Channel (PUCCH) resource with spatial relation information is not configured when a higher layer parameter satisfies a condition; and
a control section that determines a spatial relation for the PUSCH.

2. The terminal according to claim 1, wherein, except in a case where the higher layer parameter indicates that the determination is enabled, the receiving section does not receive the DCI format 0 0.

3. The terminal according to claim 1, wherein, in a case where the higher layer parameter indicates that the determination is disabled or the higher layer parameter is not configured, the receiving section does not receive the DCI format 0_0.

4. The terminal according to any one of claims 1 to 3, wherein the control section reports capability for supporting the determination.

5. A radio communication method of a terminal comprising:
receiving a Downlink Control Information (DCI) format 0_0 for scheduling a Physical Uplink Shared Channel (PUSCH) within a bandwidth part or a cell to which a Physical Uplink Control Channel (PUCCH) resource with spatial relation information is not configured when a higher layer parameter satisfies a condition; and
determining a spatial relation for the PUSCH.
